# EUROPÄISCHE PATENTSCHRIFT

(11) **EP 4 543 070 B1**
(45) Veröffentlichungstag und Bekanntmachung des Hinweises auf die Patenterteilung: **28.01.2026**
(21) Anmeldenummer: 24207335.1
(22) Anmeldetag: 17.10.2024
(51) Int. Cl.: H04W 16/14, H04W 72/12, H04W 88/16, G08C 17/02, H04W 72/1273, G01D 4/00

(54) **VERFAHREN ZUR DOWNLINK-ÜBERTRAGUNG IN EINER NETZWERK-INFRASTRUKTUR SOWIE GATEWAY UND ANORDNUNG EINER NETZWERK-INFRASTRUKTUR**
METHOD FOR DOWNLINK TRANSMISSION IN A NETWORK INFRASTRUCTURE, GATEWAY AND ARRANGEMENT OF A NETWORK INFRASTRUCTURE
PROCÉDÉ DE TRANSMISSION EN LIAISON DESCENDANTE DANS UNE INFRASTRUCTURE DE RÉSEAU, PASSERELLE ET AGENCEMENT D'UNE INFRASTRUCTURE DE RÉSEAU

(30) Priorität: 20.10.2023 DE 102023128977
(43) Veröffentlichungstag der Anmeldung: 23.04.2025
(73) Patentinhaber: Diehl Metering Systems GmbH, 90451 Nürnberg (DE)
(72) Erfinder: Fendt, Charles, 90547 Stein (DE)
(74) Vertreter: Diehl Patentabteilung

(56) Entgegenhaltungen:
- DE-A1- 102021 124 959
- US-A1- 2022 046 343
- US-A1- 2022 225 164

## Beschreibung

Die vorliegende Erfindung betrifft ein Verfahren zur Downlink-Übertragung gemäß Anspruch 1 sowie ein Gateway gemäß Anspruch 13 und eine Anordnung einer Netzwerk-Infrastruktur gemäß Anspruch 16.

### Technologischer Hintergrund und Stand der Technik

Die Datenübertragung in einem Netzwerk mit mehreren Funkknoten und einem Head-End findet typischerweise über ein Gateway statt. Die Funkknoten kommunizieren hierbei per Funk mit dem Gateway, welches die empfangenen Daten an das Head-End weiterleitet und umgekehrt. Bei einer bidirektionalen Datenübertragung werden Nachrichten in einer Uplink-Übertragung von dem Funkknoten an das Head-End gesendet und in einer Downlink-Übertragung von dem Head-End an den Funkknoten gesendet.

Bei einem Funkknoten kann es sich um eine Sensoreinrichtung zur Erfassung von Daten jeglicher Art, um eine Aktoreinrichtung zur Vornahme bestimmter Handlungen oder Maßnahmen oder um eine Kombination einer Sensoreinrichtung und einer Aktoreinrichtung handeln. Derartige Funkknoten werden mit einer eigenen, d.h. autarken, Energieversorgung in Form einer Batterie, vorzugsweise einer Longlife-Batterie, betrieben, die eine begrenzte, vom individuellen Energieverbrauch des Funkknotens abhängige Lebensdauer hat und nicht wieder aufladbar ist. Im Normalfall kann mit einer derartigen Batterie eine Standzeit "im Feld" von mindestens zehn Jahren erreicht werden, bis ein Austausch notwendig wird.

Die Datenübertragung zwischen dem Gateway und dem Funkknoten findet in Form von Datenpaketen oder Datentelegrammen, insbesondere über einen Funkkanal im SRD (Short Range Devices)- oder ISM (Industrial, Scientific, Medical)-Frequenzbereich statt. Für den Funkkanal ist ein maximaler Duty-Cycle bzw. Arbeitszyklus oder Tastgrad vorgegeben. Der Duty-Cycle ist das in Prozent ausgedrückte Verhältnis der Übertragungszeit eines einzelnen Senders zu einem Beobachtungszeitraum von z. B. einer Stunde. Wenn der maximale Duty-Cycle eines Funckanals z. B. 10 % beträgt, bedeutet dies, dass der Funkknoten maximal 6 Minuten pro Stunde aussenden darf.

Bisher ist es notwendig, für jedes Netzwerkprotokoll eine eigenständige hardwaretechnische Installation vorzusehen, was dazu führt, dass Betreiber parallele Infrastrukturen vorsehen müssen. Hierfür muss zu einem vorhandenen Gateway ein weiteres Gateway eingerichtet, welche das neue Netzwerkprotokoll unterstützt. Die Einrichtung und der Unterhalt der parallelen Infrastrukturen führt zu einem erheblichen Zusatzaufwand für den Betreiber. Der Stand der Technik ist beispielsweise DE102021124959.

### Aufgabe der vorliegenden Erfindung

Die Aufgabe der vorliegenden Erfindung besteht darin, ein neuartiges Verfahren zur Verfügung zu stellen, bei dem die Leistungsfähigkeit eines mehrere Netzwerkprotokolle unterstützenden Gateways verbessert wird.

### Lösung der Aufgabe

Die vorstehende Aufgabe wird durch ein Verfahren zur Downlink-Übertragung gemäß Anspruch 1, durch ein Gateway nach Anspruch 13 sowie durch eine Anordnung nach Anspruch 16 gelöst. Vorteilhafte Ausgestaltungen sind in den abhängigen Ansprüchen beansprucht.

Erfindungsgemäß ist ein Verfahren zur Downlink-Übertragung in einer Netzwerk-Infrastruktur vorgesehen. Die Netzwerkinfrastruktur umfasst ein erstes Netzwerk mit einem Head-End und mindestens einem Funkknoten und ein zweites Netzwerk mit einem Head-End und mindestens einem Funkknoten. Ferner umfasst die Netzwerkinfrastruktur ein Gateway, über welches sowohl Downlink-Übertragungen des ersten Netzwerks als auch Downlink-Übertragungen des zweiten Netzwerks erfolgen. Bei dem Gateway handelt es sich insbesondere um ein Gateway, welches mehrere Netzwerkprotokolle unterstützt. Erfindungsgemäß empfängt das Gateway eine aktuelle Downlink-Übertragung des ersten Netzwerks, also eine aktuelle Downlink-Übertragung des Head-Ends des ersten Netzwerks an den Funkknoten des ersten Netzwerks, oder eine aktuelle Downlink-Übertragung des zweiten Netzwerks, also eine aktuelle Downlink-Übertragung des Head-Ends des zweiten Netzwerks an den Funkknoten des zweiten Netzwerks. Das Gateway bestimmt in Abhängigkeit eines in einem vorbestimmten, vergangenen bzw. vorhergehenden Zeitraum für Downlink-Übertragungen des ersten Netzwerks und des zweiten Netzwerks, vorzugsweise zusammen, genutzten Duty-Cycles eines für die aktuelle Downlink-Übertragung vorgesehenen Funkkanals, ob die aktuelle Downlink-Übertragung ausgesendet wird oder nicht ausgesendet wird. Bei dem genutzten Duty-Cycle handelt es sich somit insbesondere um den gesamten Duty-Cycle der über den Funkkanal ausgesendeten Downlink-Übertragungen des ersten Netzwerks und des zweiten Netzwerks zusammen innerhalb des vorbestimmten, vorhergehenden Zeitraums. Das Gateway dient somit vorzugsweise als sogenannter "single point of knowledge" und kennt bzw. bestimmt den bereits gemeinsam benötigten Duty-Cycle des ersten und zweiten Netzwerks. Dies ist vorteilhaft, da der dem Gateway für den Funkkanal zur Verfügung stehende Duty-Cycle in Abhängigkeit des tatsächlichen Bedarfs des ersten und zweiten Netzwerks aufgeteilt werden kann. Wenn beispielsweise das erste Netzwerk im Vergleich zum zweiten Netzwerk in einem Zeitraum vermehrt Downlink-Übertragungen über den Funkkanal aussendet, kann dieses Netzwerk einen größeren Anteil des Duty-Cycles des Funkkanals nutzen und umgekehrt. Hierdurch wird der Duty-Cycle des Funkkanals dynamisch zwischen dem ersten und dem zweiten Netzwerk aufgeteilt, wodurch Downlink-Übertragung durch das Gateway effizienter übertragen werden können und die Leistungsfähigkeit des Gateways erhöht wird.

Vorzugsweise handelt es sich bei dem vorbestimmten vorhergehenden Zeitraum um die vergangene Stunde.

Indem das erste Netzwerk und das zweite Netzwerk über unterschiedliche Netzwerkprotokolle kommunizieren und das Gateway insbesondere beide Netzwerkprotokolle unterstützt, können parallele Infrastrukturen für unterschiedliche Netzwerkprotokolle vermieden werden. Zweckmäßigerweise handelt es sich bei dem Netzwerkprotokoll oder den Netzwerkprotokollen um das Long Range Wide Area Network (LoRaWAN), wie es beispielsweise in der LoRaWAN L2 1.0.4 Spezifikation (TS001-1.0.4) beschrieben ist, und/oder das MIOTY-Netzwerkprotokoll, wie es z. B. in der ETSI TS 103 357 V1.1.1 (2018-06) beschrieben ist, und/oder um das Open Metering System (OMS), wie es beispielsweise in der Open Metering System Specification - General Part Issue 2.3.1 / 2022-12 und/oder der Open Metering System Specification Vol.2 - Primary Communication Issue 4.5.1 / 2022-12 beschrieben ist, und/oder um das drahtlose M-BUS Netzwerkprotokoll, wie es beispielsweise in der EN 13757-4 beschrieben ist.

Vorteilhafterweise werden die Downlink-Übertragungen zwischen dem Gateway und dem Funkknoten des ersten Netzwerks über ein erstes Funknetzwerk durchgeführt und die Downlink-Übertragungen zwischen dem Gateway und dem Funcknoten des zweiten Netzwerks über ein zweites Funknetzwerk durchgeführt. Für Downlink-Übertragungen über das erste Funknetzwerk und das zweite Funknetzwerk ist insbesondere der gleiche Funkkanal vorgesehen. Alternativ sind für Downlink-Übertragungen über das erste Funknetzwerk und das zweite Funknetzwerk unterschiedliche Funkkanäle vorgesehen.

Insbesondere findet die Downlink-Übertragung zwischen dem Gateway und dem bzw. den Funkknoten über eines der lizenzfreien ISM-Bänder bzw. SRD-Bänder statt. Vorzugsweise handelt es sich bei dem einen Funkkanal oder bei den unterschiedlichen Funkkanälen um einen Funkkanal im Bereich von 863,0-865,0 MHz und/oder 865,0-868,0 MHz und/oder 868,0-868,6 MHz und/oder 869,4-869,65 MHz und/oder 869,7-870 MHz und/oder 902-928 MHz.

Zweckmäßigerweise wird der für die aktuelle Downlink-Übertragung benötigte Duty-Cycle bestimmt. Der benötigte Duty-Cycle wird anhand der Eigenschaften der aktuellen Downlink-Übertragung bestimmt und bezieht sich z. B. auf die on-air-time bzw. Übertragungszeit der aktuellen Downlink-Übertragung.

Vorzugsweise wird der für die aktuelle Downlink-Übertragung vorgesehene Funckanal durch das Gateway bestimmt. Der für die aktuelle Downlink-Übertragung vorgesehene Funkkanal kann insbesondere durch die in der aktuellen Downlink-Übertragung definierte Frequenz für die aktuelle Downlink-Übertragung bestimmt werden. Ferner wird ausgehend von dem für die aktuelle Downlink-Übertragung vorgesehenen Funkkanal der für diesen Funkkanal fest vorgegebene maximale Duty-Cycle, vorzugsweise anhand einer dem Gateway zur Verfügung stehenden Tabelle, bestimmt.

Indem ein zukünftiger Duty-Cycle bestimmt wird, der sich aus dem für die aktuelle Downlink-Übertragung benötigten Duty-Cycle und dem genutzten Duty-Cycle zusammensetzt, kann der zukünftige Duty-Cycle des für die aktuelle Downlink-Übertragung vorgesehenen Funkkanals nach dem Aussenden der aktuellen Downlink-Übertragung bestimmt werden. Zweckmäßigerweise werden hierfür der genutzte Duty-Cycle und der für die aktuelle Downlink-Übertragung benötigte Duty-Cycle addiert.

Vorzugsweise wird der fest vorgegebene maximale Duty-Cycle des Funkkanals mit dem zukünftigen Duty-Cycle verglichen. Basierend auf dem Vergleichsergebnis kann bestimmt werden, ob die aktuelle Downlink-Übertragung ausgesendet wird oder nicht. Die aktuelle Downlink-Übertragung wird ausgesendet, insbesondere falls der zukünftige Duty-Cycle kleiner oder gleich ist als der maximale Duty-Cycle des für die aktuelle Downlink-Übertragung vorgesehenen Funkkanals. Alternativ wird die aktuelle Downlink-Übertragung nicht ausgesendet, insbesondere wenn der zukünftige Duty-Cycle größer ist als der maximale Duty-Cycle des für die aktuelle Downlink-Übertragung vorgesehenen Funkkanals. Hierdurch wird gewährleistet, dass die aktuelle Downlink-Übertragung nur dann durchgeführt wird, wenn der maximale Duty-Cycle des für die aktuelle Downlink-Übertragung vorgesehenen Funkkanals durch das Aussenden der aktuellen Downlink-Übertragung nicht überschritten wird.

Indem die nicht ausgesendete aktuelle Downlink-Übertragung zu einem späteren Zeitpunkt ausgesendet wird, kann die Downlink-Übertragung nachgeholt werden, wenn ausreichend Duty-Cycle im für die aktuelle Downlink-Übertragung vorgesehenen Funkkanal zur Verfügung steht. Hierfür wird die aktuelle Downlink-Übertragung zweckmäßigerweise in einem Speicher des Gateways zwischengespeichert. Insbesondere hängt der nächste Übertragungszeitpunkt der aktuellen Downlink-Übertragung von einer Uplink-Übertragung des entsprechenden Funkknotens ab, da der Funkknoten nach dem Aussenden der Uplink-Übertragung ein Empfangsfenster öffnet.

Vorzugsweise sendet das Gateway als Antwort auf ein Nicht-Aussenden der aktuellen Downlink-Übertragung eine Ablehnungs-Information über das nicht-Aussenden an das Head-End, von dem das Gateway die aktuelle Downlink-Übertragung empfangen hat.

Dadurch, dass das Gateway die aktuelle Downlink-Übertragung entsprechend einer Priorität der aktuellen Downlink-Übertragung, vorzugsweise in Abhängigkeit von weiteren Downlink-Nachrichten, kategorisiert, kann die aktuelle Downlink-Übertragungen vorgezogen oder verzögert werden. Alternativ oder Zusätzlich können Nachrichten, die sich aus mehreren einzelnen Downlink-Übertragung zusammensetzen gebündelt übertragen werden.

Zweckmäßigerweise wird die Priorisierung der aktuellen Downlink-Übertragung in Abhängigkeit der Empfangshäufigkeit von Uplink-Übertragungen eines Funkknotens (Ziel-Funkknoten) durchgeführt, der das Ziel der aktuellen Downlink-Übertragung ist. Hierdurch können Downlink-Übertragungen an Funkknoten, von denen regelmäßig, z. B. einmal pro Stunde, Uplink-Übertragungen empfangen werden, verzögert werden, sodass Downlink-Übertragungen an Funkknoten, von denen nur sporadisch, z. B. einmal am Tag oder in unregelmäßigen Abständen, Uplink-Übertragungen empfangen werden, vorgezogen werden können. Hierdurch kann sichergestellt werden, dass diese Funkknoten möglichst schnell die an sie adressierten Downlink-Übertragungen empfangen können.

Alternativ oder zusätzlich wird die Priorisierung der aktuellen Downlink-Übertragung zweckmäßigerweise in Abhängigkeit der Eigenschaft der aktuellen Downlink-Übertragung durchgeführt. Vorteilhafterweise wird es dadurch ermöglicht, Nachrichten, die sich aus mehreren Downlink-Übertragungen zusammensetzen, gebündelt zu versenden. Hierbei wird vermieden, dass die Nachricht durch eine nicht zugehörige Downlink-Übertragung unterbrochen wird und die Nachricht wiederholt werden muss.

Dadurch, dass das Gateway eine Reservierungsinformation von dem Head-End des ersten Netzwerks oder des zweiten Netzwerks empfängt und daraufhin ein Zeitfenster oder einen Zeitpunkt für eine zukünftige Downlink-Übertragung reservieren kann, kann sichergestellt werden, dass die aktuelle Downlink-Übertragung zum geforderten Zeitfenster oder Zeitpunkt ausgesendet wird. Hierdurch können insbesondere weitere durchzuführende Downlink-Übertragungen beider Netzwerke über den für die aktuelle Downlink-Übertragung vorgesehenen Funkkanal verzögert werden, um einen ausreichenden Duty-Cycle für die aktuelle Downlink-Übertragung zu gewährleisten.

Vorteilhafterweise handelt es sich bei einem der Funkknoten um einen Funkknoten, der mehrere Netzwerkprotokolle unterstützt. Hierdurch kann der Funkknoten über mehrere Netzwerkprotokolle und/oder Netzwerke Uplink-Übertragungen aussenden und Downlink-Übertragungen empfangen.

Vorzugsweise sendet das Gateway die aktuelle Downlink-Übertragung des ersten Netzwerks an den Funkknoten des ersten Funknetzwerks über das zweite Funknetzwerk aus. Zweckmäßigerweise findet die Downlink-Übertragung der beiden Funknetzwerke hierbei über unterschiedliche Funkkanäle statt. Hierdurch kann beispielsweise die aktuelle Downlink-Übertragung über den Funkkanal des zweiten Netzwerks gesendet werden, wenn die aktuelle Downlink-Übertragung aufgrund des Duty-Cycles nicht mehr über den für die aktuelle Downlink-Übertragung vorgesehenen Funkkanal des ersten Funknetzwerks gesendet werden kann. Alternativ kann die aktuelle Downlink-Übertragung über das Netzwerkprotokoll des zweiten Netzwerks gesendet werden. Durch den Wechsel des Netzwerkprotokolls kann z. B. der Duty-Cycle für die aktuelle Downlink-Übertragung reduziert werden, wodurch der verbleibende Duty-Cycle des Funkkanals optimal ausgenutzt werden kann. Hierdurch kann der Funkkanal beibehalten werden.

Vorzugsweise umfasst die Ablehnungs-Information über das Nicht-Aussenden der Downlink-Übertragung eine zusätzliche Information zu dem zweiten Netzwerk. Hierdurch kann das erste Netzwerk durch das Gateway darauf hingewiesen werden, dass eine Downlink-Übertragung über das zweite Netzwerk möglich sein könnte.

Dadurch, dass das erste Netzwerk eine Information an das zweite Netzwerk sendet, kann das zweite Netzwerk die aktuelle, vom ersten Netzwerk nicht durchgeführte Downlink-Übertragung an den Ziel-Funkknoten aussenden. Hierdurch kann die aktuelle Downlink-Übertragung über das zweite Netzwerk gesendet werden.

Vorteilhafterweise handelt es sich bei dem Funkknoten um eine Sensoreinrichtung zur Erfassung von Daten jeglicher Art oder um eine Aktoreinrichtung zur Vornahme bestimmter Handlungen oder Maßnahmen oder um eine Kombination einer Sensoreinrichtung und einer Aktoreinrichtung handeln. Derartige Funkknoten werden mit einer eigenen, d.h. autarken, Energieversorgung in Form einer Batterie, vorzugsweise einer Longlife-Batterie, betrieben, die eine begrenzte, vom individuellen Energieverbrauch des Funkknotens abhängige Lebensdauer hat und nicht wieder aufladbar ist. Im Normalfall kann mit einer derartigen Batterie eine Standzeit "im Feld" von mindestens zehn Jahren erreicht werden, bis ein Austausch notwendig wird.

Zudem wird nebengeordnet ein Gateway beansprucht, das mindestens einen Transceiver sowie eine Antenne umfasst. Erfindungsgemäß ist das Gateway dazu eingerichtet, das Verfahren nach einem der Ansprüche 1-12 auszuführen.

Vorzugsweise unterstützt das Gateway mehrere Netzwerkprotokolle. Insbesondere ist für jedes Netzwerkprotokoll, das von dem Gateway unterstützt wird, ein eigener Transceiver vorgesehen.

Zweckmäßigerweise umfasst das Gateway eine einzige Antenne, über die die Downlink-Übertragungen der verschiedenen Netzwerke gesendet werden.

Vorteilhafterweise umfasst das Gateway einen Proxy, z. B. eine Kommunikationsschnittstelle, durch den bzw. die das Verfahren durchgeführt wird. Der Proxy kommuniziert hierbei insbesondere mit dem Head-End des ersten Netzwerks und dem Head-End des zweiten Netzwerks und weist die Transceiver der einzelnen Netzwerke an, Downlink-Übertragungen durchzuführen. Bei einer Ablehnung der Downlink-Übertragung wird die Ablehnungs-Information insbesondere durch den Proxy ausgesendet.

Ferner wird nebengeordnet eine Anordnung einer Netzwerk-Infrastruktur beansprucht. Die Netzwerk-Infrastruktur umfasst ein erstes Netzwerk mit einem Head-End und mindestens einem Funkknoten, ein zweites Netzwerk mit einem Head-End und mindestens einem Funkknoten sowie ein Gateway zur Datenübertragung zwischen dem Head-End des ersten Netzwerks und dem Funkknoten des ersten Netzwerks sowie zwischen dem Head-End des zweiten Netzwerks und dem Funcknoten des zweiten Netzwerks. Erfindungsgemäß ist als Gateway das Gateway nach einem der Ansprüche 13-15 vorgesehen.

### Beschreibung der Erfindung anhand von Ausführungsbeispielen

Nachstehend werden zweckmäßige Ausgestaltungen der vorliegenden Erfindung näher beschrieben. Wiederkehrende Merkmale sind der Übersichtlichkeit halber lediglich mit einem Bezugszeichen versehen. Es zeigen:
- Fig. 1: eine beispielhafte, schematische Darstellung einer Netzwerk-Infrastruktur umfassend zwei Netzwerke;
- Fig. 2: eine beispielhafte, schematische Darstellung eines Gateways der Netzwerk-Infrastruktur nach Fig. 1 zur Durchführung eines Verfahrens zur Downlink-Übertragung gemäß einem ersten Ausführungsbeispiel;
- Fig. 3: ein beispielhaftes Flussdiagramm zum Ablauf des Verfahrens zur Downlink-Übertragung nach Fig. 2;
- Fig. 4a: ein beispielhaftes Diagramm eines genutzten Duty-Cycle gegenüber der Zeit;
- Fig. 4b: ein beispielhaftes Diagramm eines genutzten Duty-Cycle gegenüber der Zeit;
- Fig. 5: eine schematische, beispielhafte Darstellung des Gateways nach Fig. 2 zur Durchführung des Verfahrens zur Downlink-Übertragung gemäß einem zweiten Ausführungsbeispiel
- Fig. 6: eine schematische, beispielhafte Darstellung des Gateways nach Fig. 2 zur Durchführung des Verfahrens zur Downlink-Übertragung gemäß einem dritten Ausführungsbeispiel; sowie
- Fig. 7: eine schematische, beispielhafte Darstellung des Gateways nach Fig. 2 zur Durchführung des Verfahrens zur Downlink-Übertragung gemäß einem vierten Ausführungsbeispiel.

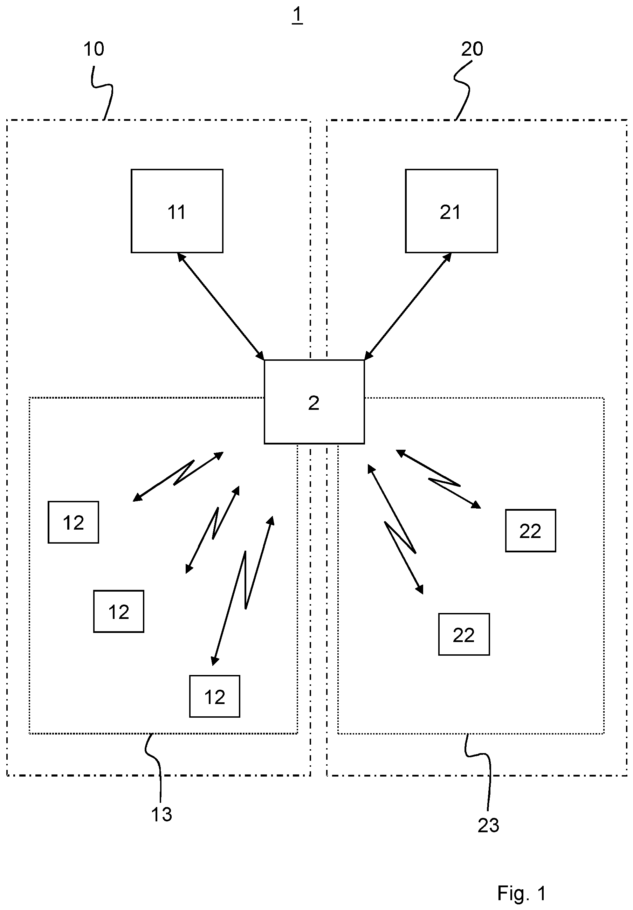

Fig. 1 zeigt eine Netzwerk-Infrastruktur 1. Die Netzwerk-Infrastruktur 1 umfasst ein erstes Netzwerk 10 mit einem Head-End 11 und mit mehreren Funkknoten 12.

Ferner ist ein Gateway 2 vorgesehen, welches mit dem Head-End 11 über Funk oder kabelgebunden kommuniziert. Das Gateway 2 kommuniziert mit den Funcknoten 12 per Funk über ein erstes Funknetzwerk 13. Hierbei werden Uplink-Übertragungen von den jeweiligen Funkknoten 12 über das Gateway 2 an das Head-End 11 gesendet. Downlink-Übertragungen werden von dem Head-End 11 über das Gateway 2 an die jeweiligen Funkknoten 12 gesendet.

Die Netzwerk-Infrastruktur 1 umfasst zudem ein zweites Netzwerk 20 mit einem Head-End 21 und mit zwei Funkknoten 22. Das Gateway 2 kommuniziert mit dem Head-End 11 über Funk oder kabelgebunden. Das Gateway 2 kommuniziert mit den Funkknoten 22 per Funk über ein zweites Funknetzwerk 23. Hierbei werden Uplink-Übertragungen von den jeweiligen Funkknoten 22 über das Gateway 2 an das Head-End 21 gesendet. Downlink-Übertragungen werden von dem Head-End 21 über das Gateway 2 an die jeweiligen Funkknoten 22 gesendet.

Bei den Funkknoten handelt es sich insbesondere um eine Sensoreinrichtung zur Erfassung von Daten jeglicher Art, um eine Aktoreinrichtung zur Vornahme bestimmter Handlungen oder Maßnahmen oder um eine Kombination einer Sensoreinrichtung und einer Aktoreinrichtung handeln. Die Funkknoten werden insbesondere mit einer eigenen, d.h. autarken, Energieversorgung in Form einer Batterie, vorzugsweise einer Longlife-Batterie, betrieben, die eine begrenzte, vom individuellen Energieverbrauch des Funkknotens abhängige Lebensdauer hat und nicht wieder aufladbar ist.

Die Kommunikation innerhalb des ersten Netzwerks 10 und des zweiten Netzwerks 20 findet jeweils über ein Netzwerkprotokoll statt. Hierbei kann es sich um das gleiche Netzwerkprotokoll oder um unterschiedliche Netzwerkprotokolle handeln.

Die Funkkommunikation zwischen dem Gateway 2 und den Funkknoten 12 des ersten Netzwerks 10 findet über einen Funkkanal des ersten Funknetzwerks 13 statt. Die Funkkommunikation zwischen dem Gateway 2 und den Funkknoten 22 des zweiten Netzwerks 20 findet über einen Funkkanal des zweiten Funknetzwerks 23 statt. Bei dem Funkkanal des ersten Funknetzwerks 13 und dem Funckanal des zweiten Funknetzwerks 23 kann es sich um den gleichen Funkkanal oder um unterschiedliche Funkkanäle handeln.

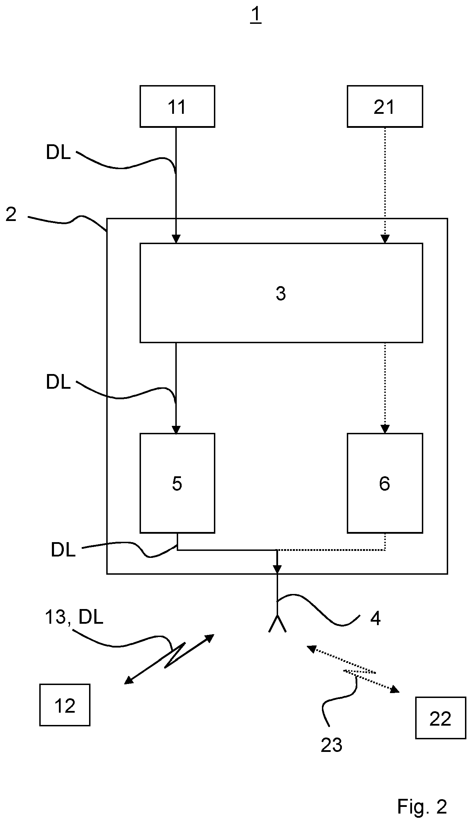

Fig. 2 zeigt eine beispielhafte, schematische Darstellung des Gateways 2. Das Gateway 2 umfasst einen ersten Transceiver 5 für die Funkkommunikation mit den Funkknoten 12 des ersten Netzwerks 10 über das erste Funknetzwerk 13. Ferner umfasst das Gateway 2 einen zweiten Transceiver 6 für die Funkkommunikation mit den Funkknoten 22 des zweiten Netzwerks 20 über das zweite Funknetzwerk 23. Am Gateway 2 ist eine einzige Antenne 4 zum Aussenden und Empfangen der Funksignale vorgesehen. Alternativ kann für jeden Transceiver 5, 6 eine eigene Antenne 4 vorgesehen sein.

Das Gateway 2 umfasst ferner einen Proxy 3, z. B. eine Kommunikationsschnittstelle, welcher bzw. welche mit dem Head-End 11 und dem ersten Transceiver 5 sowie mit dem Head-End 21 und dem zweiten Transceiver 6 kommuniziert.

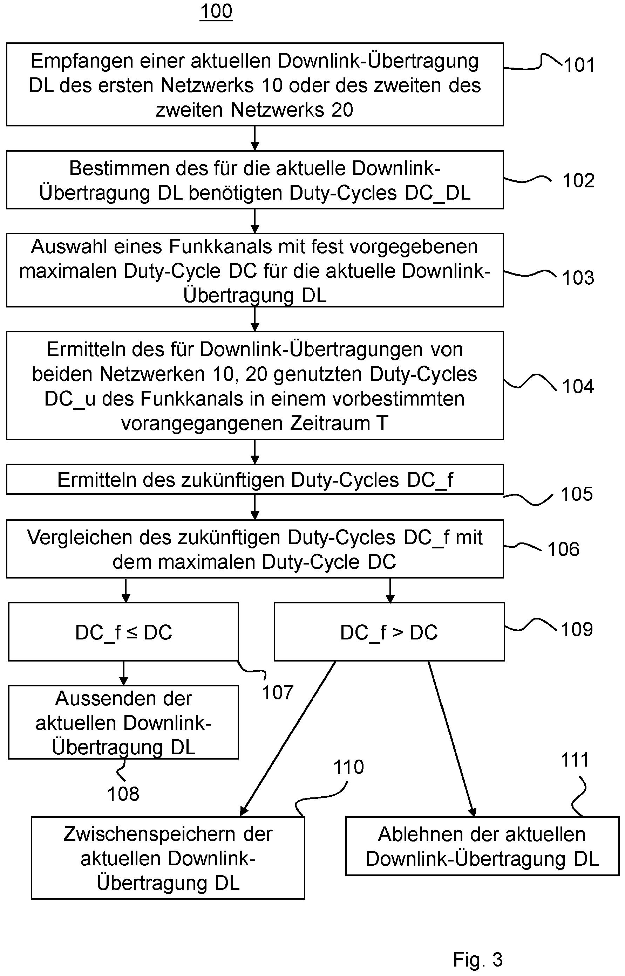

Nachstehend wird das Verfahren 100 zur Durchführung einer Downlink-Übertragung am Beispiel einer aktuellen Downlink-Übertragung DL des ersten Netzwerks 10 anhand der Fig. 2 und 3 erläutert. Der Übertragungsweg der aktuellen Downlink-Übertragung DL der ersten Netzwerks 10 wird in Fig. 2 mit durchgehenden Linien dargestellt. Eine Downlink-Übertragung des zweiten Netzwerks 20 kann analog wie nachfolgend beschrieben durchgeführt werden. Der Übertragungsweg des zweiten Netzwerks 20 hingegen wird mit einer gestrichelten Linie dargestellt.

Zur Durchführung der aktuellen Downlink-Übertragung DL im ersten Netzwerk 10 überträgt das Head-End 11 die aktuelle Downlink-Übertragung DL an das Gateway 2. Das Gateway 2 empfängt die aktuelle Downlink-Übertragung DL, vgl. Fig. 2 und Fig. 3, Schritt 101. Die aktuelle Downlink-Übertragung DL wird insbesondere an den Proxy 3 des Gateways 2 übermittelt.

Im Anschluss wird durch den Proxy 3 bzw. das Gateway 2 der für die aktuelle Downlink-Übertragung DL benötigte Duty-Cycle DC_DL bestimmt, Schritt 102. Dies kann vorzugsweise durch die on-air-time bzw. die Übertragungszeit für die aktuelle Downlink-Übertragung DL erfolgen, welche insbesondere durch die Eigenschaften bzw. Informationen der vom Gateway 2 empfangenen aktuellen Downlink-Übertragung DL ermittelt werden kann.

Der für die aktuelle Downlink-Übertragung DL vorgesehene Funkkanal wird, vorzugsweise anhand der in der aktuellen Downlink-Übertragung DL definierten Frequenz für die aktuelle Downlink-Übertragung DL, bestimmt und für die aktuelle Downlink-Übertragung DL ausgewählt, Schritt 103. Ein fest vorgegebener maximaler Duty-Cycle DC für den für die aktuelle Downlink-Übertragung DL vorgesehenen Funkkanal wird vorzugsweise anhand einer Tabelle, in der für verschiedene Funkkanäle die jeweiligen maximalen Duty-Cycles vorgegeben sind, bestimmt.

Gemäß Schritt 104 wird ein bisher genutzter Duty-Cycle DC_u des für die aktuelle Downlink-Übertragung DL vorgesehenen Funkkanals bestimmt. Hierbei umfasst der bisher genutzte Duty-Cycle DC_u den von Downlink-Übertragungen des ersten Netzwerks 10 und von Downlink-Übertragungen des zweiten Netzwerks 20 genutzten Duty-Cycle des entsprechenden Funkkanals in einem fest vorgegebenen vorhergehenden Zeitraum T, vorzugsweise der letzten Stunde.

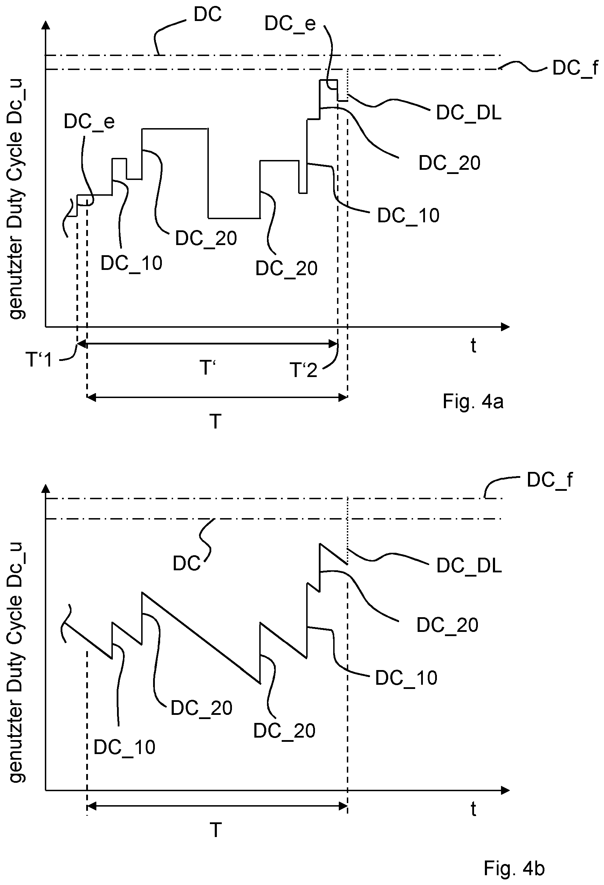

Der Verlauf des bisher genutzten Duty-Cycle DC_u wird beispielsweise in Figuren 4a und 4b dargestellt. Der genutzte Duty-Cycle DC_u steigt pro gesendeter Downlink-Übertragung des ersten Netzwerks 10 bzw. des zweiten Netzwerks 20 um einen der Downlink-Übertragung entsprechenden Duty-Cycle DC_10, DC_20 an. Hierbei hängt die Größe des Duty-Cycles DC_10, DC_20 von der entsprechenden Downlink-Übertragung ab und ist dementsprechend unterschiedlich groß. Nach Ablauf des fest vorgegebenen vorhergehenden Zeitraum T nach dem Aussenden einer Downlink-Übertragung sinkt der genutzte Duty-Cycle DC_u um den entsprechenden Duty-Cycle der Downlink-Übertragung ab.

Beispielsweise wird zum Zeitpunkt T'1 eine Downlink-Übertragung mit dem Duty-Cycle DC_e ausgesendet, vgl. Fig. 4a. Der genutzte Duty-Cycle DC_u steigt entsprechend um den Wert des Duty-Cycles DC_e an. Nach Ablauf des fest vorgegebenen Zeitintervalls T' zum Zeitpunkt T'2 sinkt der Wert des genutzten Duty-Cycles DC_u um den Wert des Duty-Cycles DC_e, da die entsprechende Downlink-Übertragung nicht mehr innerhalb des fest vorgegebenen, vorhergehenden Zeitraums T' liegt. Da dies für die Duty-Cycles aller vom Gateway 2 ausgesendeten Downlink-Übertragungen des ersten und zweiten Netzwerks 10, 20 geschieht, stellt der genutzte Duty-Cycle DC_u fortlaufend den aktuellen vom Gateway 2 verbrauchten Duty-Cycle dar.

Ferner wird ein zukünftiger Duty-Cycle DC_f ermittelt, der sich aus dem bisher genutzten Duty-Cycle DC_u und dem für die aktuelle Downlink-Übertragung DL benötigten Duty-Cycle DC_DL zusammensetzt, vgl. Schritt 105. Der zukünftige Duty-Cycle DC_f wird vorzugsweise durch Addition des bisher genutzten Duty-Cycle DC_u und des für die aktuelle Downlink-Übertragung DL benötigten Duty-Cycles DC_DL gebildet. Der zukünftige Duty-Cycle beschreibt den Duty-Cycle für den Fall, dass die aktuelle Downlink-Übertragung DL durchgeführt wird.

In Figuren 4a und 4b ist der für die aktuelle Downlink-Übertragung DL benötigten Duty-Cycle DC_DL in einer gepunkteten Linie dargestellt und wird am Ende des Zeitraums T auf den bisher genutzten Duty-Cycle DC_u aufaddiert. Der zukünftige Duty-Cycle DC_f ist ebenfalls aus den Figuren 4a und 4b ersichtlich.

Der zukünftige Duty-Cycle DC_f wird mit dem fest vorgegebenen maximalen Duty-Cycle DC des für die aktuelle Downlink-Übertragung vorgesehenen Funkkanals verglichen, Schritt 106.

Falls der zukünftige Duty-Cycle DC_f kleiner oder gleich ist als der maximale Duty-Cycle DC, Schritt 107, vgl. Fig. 4a, dann wird die aktuelle Downlink-Übertragung DL vom Gateway 2 ausgesendet, Schritt 108, insbesondere in dem der Proxy 3 die aktuelle Downlink-Übertragung DL an den ersten Transceiver 5 überträgt. Der erste Transceiver 5 übermittelt dann die aktuelle Downlink-Übertragung DL über die Antenne 4 an den Funkknoten 12.

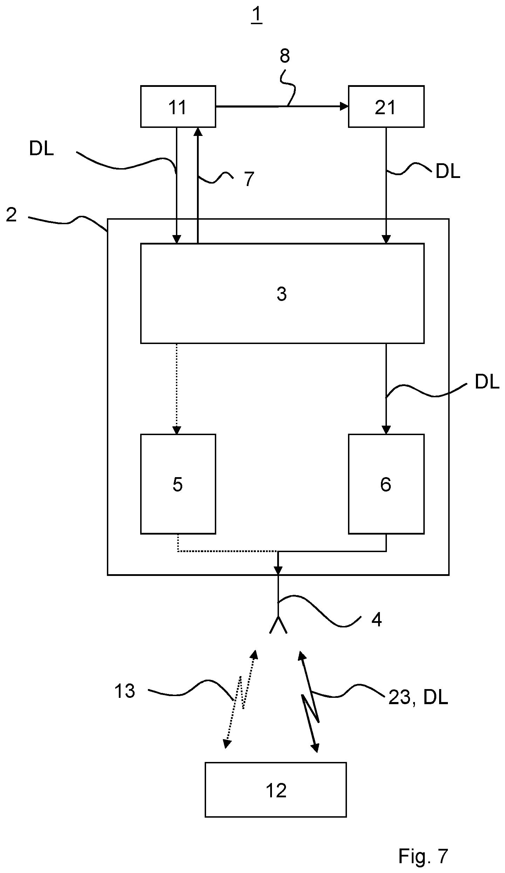

Alternativ wird die aktuelle Downlink-Übertragung DL nicht gesendet, wenn der zukünftige Duty-Cycle DC_f größer als der maximale Duty-Cycle DC ist, Schritt 109, vgl. Fig. 4b. Die nicht ausgesendete aktuelle Downlink-Übertragung DL kann gespeichert werden und zu einem späteren Zeitpunkt ausgesendet werden. Alternativ kann die nicht ausgesendete aktuelle Downlink-Übertragung DL vom Gateway 2 bzw. Proxy 3 endgültig abgelehnt werden. In letzterem Fall sendet das Gateway 2 bzw. der Proxy 3 eine Ablehnungs-Information 7 an das Head-End 11, wodurch dieses darüber informiert wird, dass die aktuelle Downlink-Übertragung DL nicht ausgesendet wird, vgl. Fig. 7.

In einer Ausführung des Verfahrens kann die aktuelle Downlink-Übertragung DL entsprechend einer Priorität kategorisiert werden. Hierbei analysiert das Gateway 2 bzw. der Proxy 3 zum einen den Ziel-Funkknoten der aktuelle Downlink-Übertragung DL und/oder die Eigenschaften der aktuellen Downlink-Übertragung DL.

Die Priorisierung der aktuellen Downlink-Übertragung DL kann basierend auf der Empfangshäufigkeit von Uplink-Übertragungen des Ziel-Funkknotens erfolgen. Wenn das Gateway 2 nur sporadisch, beispielsweise einmal am Tag oder in unregelmäßigen Abständen, Uplink-Übertragungen des Zielfunkknotens empfängt, kann die aktuelle Downlink-Übertragung DL an den Ziel-Funkknoten priorisiert behandelt werden. So kann die aktuelle Downlink-Übertragung DL ausgesendet werden, wenn von dem Ziel-Funkknoten gerade eine Uplink-Übertragung empfangen wurde, sodass die aktuelle Downlink-Übertragung DL an den Ziel-Funkknoten einer höheren Wahrscheinlichkeit von diesem empfangen wird. Downlink-Übertragungen an einen anderen Funkknoten, der mehrmals täglich erreichbar ist, können verzögert werden, da bei diesen öfters die Möglichkeit für eine Downlink-Übertragung besteht.

Alternativ oder zusätzlich wird die Priorisierung der aktuellen Downlink-Übertragung DL in Abhängigkeit der Eigenschaft der aktuellen Downlink-Übertragung durchgeführt. Vorteilhafterweise wird es dadurch ermöglicht, Nachrichten, die sich aus mehreren Downlink-Übertragungen zusammensetzen, gebündelt zu versenden. Hierbei wird vermieden, dass die Nachricht durch eine nicht zugehörige Downlink-Übertragung unterbrochen wird und die Nachricht wiederholt werden muss.

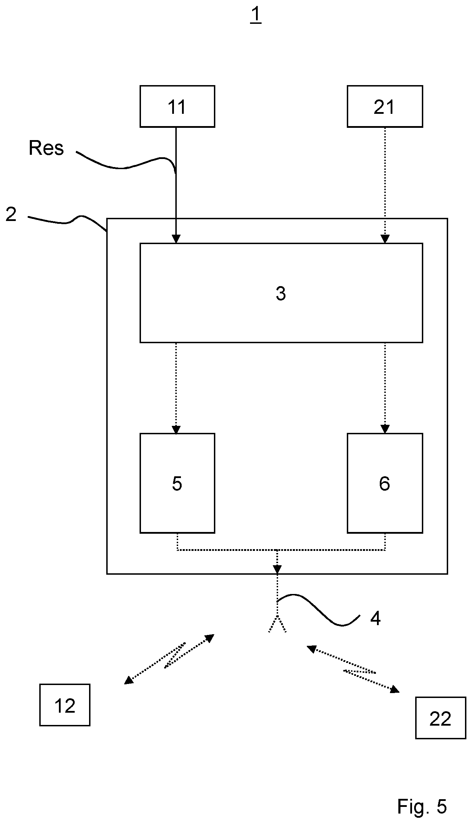

Gemäß Fig. 5 kann das Head-End 11 des ersten Netzwerks 10 in einem zweiten Ausführungsbeispiel des Verfahrens 100 eine Reservierungsinformation Res an das Gateway 2 senden. Die Reservierungsinformation Res enthält z. B. ein vorbestimmtes Zeitfenster oder einen vorbestimmten Zeitpunkt, zu dem die aktuelle Downlink-Übertragung DL gesendet werden soll. Das Gateway 2 bzw. der Proxy 3 können daraufhin Downlink-Übertragungen des ersten Netzwerks 10 und des zweiten Netzwerks 20 verzögern oder vorziehen, sodass zu dem vorbestimmten Zeitfenster oder Zeitpunkt ein ausreichender Duty-Cycle für die aktuelle Downlink-Übertragung DL zur Verfügung steht. Hierdurch kann sichergestellt werden, dass die aktuelle Downlink-Übertragung DL zu dem vorbestimmten Zeitfenster oder Zeitpunkt gesendet werden kann.

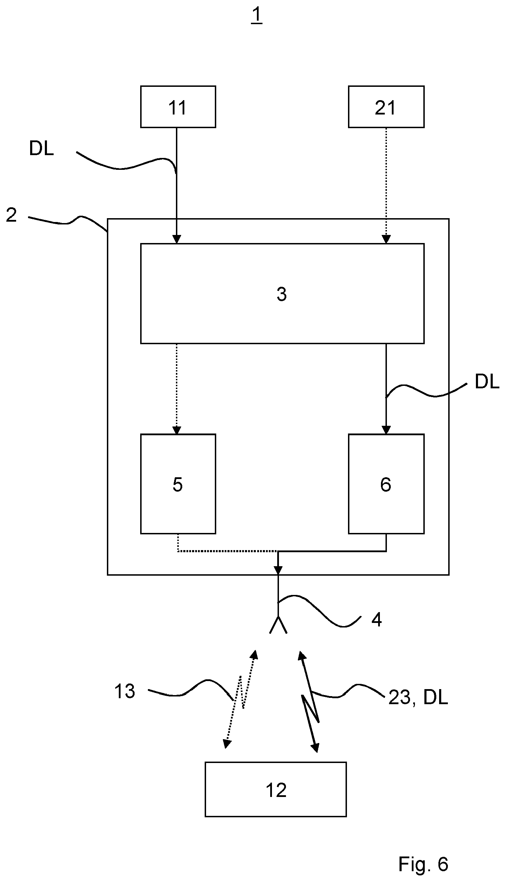

Figuren 6 und 7 zeigen die Netzwerk-Infrastruktur 1 mit einem Funkknoten 12, der mehrere Netzwerkprotokolle unterstützt. Der Funkknoten 12 kann somit über mehrere Netzwerkprotokolle und somit z. B. über das erste Funknetzwerk 13 und das zweite Funknetzwerk 23 mit dem Gateway 2 kommunizieren. Hierbei kann die aktuelle Downlink-Übertragung DL des ersten Netzwerks 10 auch über das zweite Netzwerk 20 gesendet werden, wie nachfolgend beschrieben.

Gemäß dem dritten Ausführungsbeispiel nach Fig. 6 sendet das Head-End 11 des ersten Netzwerks 10 die aktuelle Downlink-Übertragung DL an das Gateway 2 aus, welche von diesem Empfangen wird. Während des Verfahrensablaufs stellt das Gateway 2 bzw. der Proxy 3 fest, dass die aktuelle Downlink-Übertragung DL nicht über den für die aktuelle Downlink-Übertragung DL vorgesehenen Funkkanal des ersten Funknetzwerks 13 ausgesendet werden kann, da z. B. nicht ausreichend Duty-Cycle zur Verfügung steht. Das Gateway 2 bzw. der Proxy 3 kann in diesem Fall überprüfen, ob die aktuelle Downlink-Übertragung DL über den Funkkanal des zweiten Funknetzwerks 23 durchgeführt werden kann. Hierbei prüft das Gateway 2 bzw. der Proxy 3 ob dem Funkkanal des zweiten Funknetzwerks 23 ein ausreichender Duty-Cycle zur Verfügung steht und sendet daraufhin die aktuelle Downlink-Übertragung DL über das zweite Funknetzwerk 23 aus.

Dies ist zum Beispiel der Fall, wenn sich der für die aktuelle Downlink-Übertragung DL vorgesehene Funkkanal des ersten Funknetzwerks 13 und der Funkkanal des zweiten Netzwerks 23 voneinander unterscheiden und im Funkkanal des zweiten Funknetzwerks 23 ausreichend Duty-Cycle zur Verfügung steht.

Alternativ kann die on-air-time bzw. die Übertragungszeit der aktuellen Downlink-Übertragung DL im Funkkanal des zweiten Funknetzwerks 23 aufgrund einer höheren Übertragungsgeschwindigkeit des Netzwerkprotokolls des zweiten Netzwerk 20 geringer sein, sodass der für die aktuelle Downlink-Übertragung DL benötigte Duty-Cycle DC_DL des zweiten Netzwerks 20 geringer ist als der des ersten Netzwerks 10. Hierdurch kann die aktuelle Downlink-Übertragung DL über den Funkkanal des zweiten Funknetzwerk 23 übertragen werden. Dies ist besonders vorteilhaft, wenn sich lediglich die Netzwerkprotokolle des ersten und zweiten Netzwerks 10, 20 voneinander unterscheiden und beide Funknetzwerke 13, 23 den gleichen Funkkanal nutzen.

Gemäß dem vierten Ausführungsbeispiel nach Fig. 7 empfängt das Gateway 2 die aktuelle Downlink-Übertragung DL vom Head-End 11 des ersten Netzwerks 10. Da die aktuelle Downlink-Übertragung DL nicht ausgesendet werden kann, schickt das Gateway 2 die Ablehnungs-Information 7 an das Head-End 11. Die Ablehnungs-Information 7 umfasst hierbei eine zusätzliche Information an das Head-End 11, mit dem das Gateway 2 dem Head-End 11 mitteilt, dass das zweite Netzwerk 20 die aktuelle Downlink-Übertragung DL durchführen könnte. Das Head-End 11 des ersten Netzwerks 10 sendet daraufhin eine Information 8 an das Head-End 21 des zweiten Netzwerks und beauftragt das Head-End 21 die aktuelle Downlink-Übertragung DL über das zweite Netzwerk 20 durchzuführen. Das zweite Netzwerk 20 führt die aktuelle Downlink-Übertragung DL durch.

### BEZUGSZEICHENLISTE

- 1: Netzwerk-Infrastruktur
- 2: Gateway
- 3: Proxy
- 4: Antenne
- 5: Transceiver
- 6: Transceiver
- 7: Ablehnungs-Information
- 8: Information
- 10: Netzwerk
- 11: Head-End
- 12: Funkknoten
- 13: Funknetzwerk
- 20: Netzwerk
- 21: Head-End
- 22: Funkknoten
- 23: Funknetzwerk
- 100: Verfahren
- 101-111: Verfahrensschritte
- DL: Downlink
- DC: maximaler Duty-Cycle
- DC_10: Duty-Cycle
- DL_20: Duty-Cycle
- DC_e: Duty-Cycle
- DC_u: genutzter Duty-Cycle
- DC_f: zukünftiger Duty-Cycle
- T: Zeitraum
- Res: Reservierungsbefehl

## Patentansprüche

1. Verfahren zur Downlink-Übertragung in einer Netzwerk-Infrastruktur (1) mit einem ersten Netzwerk (10) umfassend ein Head-End (11) und mindestens einen Funkknoten (12), einem zweiten Netzwerk (20) umfassend ein Head-End (21) und mindestens einen Funkknoten (22) und einem Gateway (2),
wobei eine Downlink-Übertragung des ersten Netzwerks (10) und eine Downlink-Übertragung des zweiten Netzwerks (20) über das Gateway (2) erfolgt und
wobei das Verfahren folgende Schritte umfasst:
Empfangen einer aktuellen Downlink-Übertragung (DL) des Head-Ends (11) des ersten Netzwerks (10) oder des Head-Ends (21) des zweiten Netzwerks (20) durch das Gateway (2);
Senden oder Nicht-Senden der aktuellen Downlink-Übertragung (DL) durch das Gateway (2) in Abhängigkeit eines in einem vorbestimmten vorhergehenden Zeitraum (T) für Downlink-Übertragungen des ersten Netzwerks (10) und zweiten Netzwerks (20) genutzten Duty-Cycles (DC_u) eines für die aktuelle Downlink-Übertragung (DL) vorgesehenen Funkkanals.

2. Verfahren nach Anspruch 1, **dadurch gekennzeichnet, dass** das erste Netzwerk (10) und das zweite Netzwerk (20) über unterschiedliche Netzwerkprotokolle kommunizieren.

3. Verfahren nach Anspruch 1 oder 2, **dadurch gekennzeichnet, dass** ein erstes Funknetzwerk (13) zwischen dem Gateway (2) und dem Funkknoten (12) des ersten Netzwerks (10) und ein zweites Funknetzwerk (23) zwischen dem Gateway (2) und dem Funkknoten (22) des zweiten Netzwerks (20) vorgesehen ist, wobei für Downlink-Übertragungen des ersten Funknetzwerks (13) und des zweiten Funknetzwerks (23) der gleiche Funkkanal oder unterschiedliche Funkkanäle vorgesehen sind.

4. Verfahren nach einem der vorhergehenden Ansprüche, **dadurch gekennzeichnet, dass** der für die aktuelle Downlink-Übertragung (DL) benötigte Duty-Cycle (DC_DL) bestimmt wird.

5. Verfahren nach einem der vorhergehenden Ansprüche, **dadurch_gekennzeichnet, dass** der für die aktuelle Downlink-Übertragung (DL) vorgesehene Funkkanal durch das Gateway (2) bestimmt wird.

6. Verfahren nach Anspruch 5, **dadurch gekennzeichnet, dass** ein zukünftiger Duty-Cycle (DC_f) bestimmt wird, der sich aus dem für die aktuelle Downlink-Übertragung (DL) benötigten Duty-Cycle (DC_DL) und dem genutzten Duty-Cycle (DC_u) zusammensetzt,
wobei insbesondere vorgesehen ist, dass ein fest vorgegebener maximaler Duty-Cycle (DC) des für die aktuelle Downlink-Übertragung (DL) vorgesehenen Funkkanals mit dem zukünftigen Duty-Cycle (DC_f) verglichen wird, wobei die aktuelle Downlink-Übertragung (DL) von dem Gateway (2) ausgesendet wird, wenn der zukünftige Duty-Cycle (DC_f) kleiner oder gleich ist als der maximale Duty-Cycle (DC) des Funkkanals, oder die aktuelle Downlink-Übertragung (DC) nicht ausgesendet wird, wenn der zukünftige Duty-Cycle (DC_f) größer ist als der maximale Duty-Cycle (DC) des Funkkanals.

7. Verfahren nach einem der vorhergehenden Ansprüche, **dadurch gekennzeichnet, dass** die nicht ausgesendete aktuelle Downlink-Übertragung (DL) zu einem späteren Zeitpunkt ausgesendet wird.

8. Verfahren nach einem der vorhergehenden Ansprüche, **dadurch gekennzeichnet, dass** das Gateway (2) als Antwort auf ein Nicht-Aussenden der aktuellen Downlink-Übertragung (DL) eine Ablehnungs-Information (7) über das Nicht-Aussenden an das entsprechende Head-End (11, 21) sendet.

9. Verfahren nach einem der vorhergehenden Ansprüche, **dadurch gekennzeichnet, dass** das Gateway (2) die aktuelle Downlink-Übertragung (DL) entsprechend einer Priorität der aktuellen Downlink-Übertragung (DL) kategorisiert,
wobei insbesondere vorgesehen ist, dass die Priorisierung der aktuellen Downlink-Übertragung (DL) durchgeführt wird in Abhängigkeit
- der Empfangshäufigkeit von Uplink-Übertragungen eines Funcknotens (12, 22) und/oder
- der Eigenschaft der aktuellen Downlink-Übertragung (DL).

10. Verfahren nach einem der vorhergehenden Ansprüche, **dadurch gekennzeichnet, dass** das Gateway (2) eine Reservierungsinformation (Res) von dem Head-End (11) des ersten Netzwerks (10) oder dem Head-End (21) des zweiten Netzwerks (20) empfängt und daraufhin ein Zeitfenster oder einen Zeitpunkt für eine zukünftige Downlink-Übertragung reservieren kann.

11. Verfahren nach einem der vorhergehenden Ansprüche, **dadurch gekennzeichnet, dass** es sich bei einem der Funkknoten (12) um einen Funcknoten handelt, der mehrere Netzwerkprotokolle unterstützt,
wobei insbesondere vorgesehen ist, dass das Gateway (2) die aktuelle Downlink-Übertragung (DL) des ersten Netzwerks (10) an den Funkknoten (12) des ersten Funknetzwerks (13) über das zweite Funknetzwerk (23) aussendet.

12. Verfahren nach einem der vorhergehenden Ansprüche 8-11, **dadurch gekennzeichnet, dass** die Ablehnungs-Information (7) eine zusätzliche Information zu dem zweiten Netzwerk (20) umfasst,
wobei insbesondere vorgesehen ist, dass das erste Netzwerk (10) eine Information (8) an das zweite Netzwerk (20) sendet, wobei das zweite Netzwerk (20) aufgrund der Information (8) die aktuelle Downlink-Übertragung (DL) über das zweite Netzwerk (20) aussendet.

13. Gateway (2) umfassend mindestens einen Transceiver (5, 6) sowie eine Antenne (4), **dadurch gekennzeichnet, dass** das Gateway (2) dazu eingerichtet ist, das Verfahren nach einem der vorhergehenden Ansprüche auszuführen.

14. Gateway (2) nach Anspruch 13, **dadurch gekennzeichnet, dass** das Gateway (2) eine einzige Antenne (3) umfasst.

15. Gateway (2) nach Anspruch 13 oder 14, **dadurch gekennzeichnet, dass** das Gateway (2) einen Proxy (3) umfasst und das Verfahren durch den Proxy (3) durchgeführt wird.

16. Anordnung einer Netzwerk-Infrastruktur (1) umfassend:
ein erstes Netzwerk (10) mit einem Head-End (11) und mindestens einem Funkknoten (12),
ein zweites Netzwerk (20) mit einem Head-End (21) und mindestens einem Funkknoten (13), und
ein Gateway zur Datenübertragung zwischen dem Head-End (11) des ersten Netzwerks (10) und dem entsprechenden Funkknoten (12) des ersten Netzwerks (10) sowie zwischen dem Head-End (21) des zweiten Netzwerks (20) und dem entsprechenden Funkknoten (22) des zweiten Netzwerks (20),
**dadurch gekennzeichnet, dass**
das Gateway ein Gateway (2) nach einem der Ansprüche 13-15 ist.

## Claims

1. Method for downlink transmission in a network infrastructure (1) containing a first network (10) comprising a headend (11) and at least one radio node (12), a second network (20) comprising a headend (21) and at least one radio node (22), and a gateway (2),
a downlink transmission of the first network (10) and a downlink transmission of the second network (20) taking place via the gateway (2) and
the method involving the following steps:
receiving a current downlink transmission (DL) of the headend (11) of the first network (10) or the headend (21) of the second network (20) by way of the gateway (2);
sending or not sending the current downlink transmission (DL) by way of the gateway (2) on the basis of a duty cycle (DC_u) of a radio channel provided for the current downlink transmission (DL), which duty cycle was used for downlink transmissions of the first network (10) and the second network (20) in a predetermined previous period (T).

2. Method according to Claim 1, **characterized in that** the first network (10) and the second network (20) communicate using different network protocols.

3. Method according to Claim 1 or 2, **characterized in that** there is provision for a first radio network (13) between the gateway (2) and the radio node (12) of the first network (10) and a second radio network (23) between the gateway (2) and the radio node (22) of the second network (20), the same radio channel or different radio channels being provided for downlink transmissions of the first radio network (13) and the second radio network (23).

4. Method according to one of the preceding claims, **characterized in that** the duty cycle (DC_DL) required for the current downlink transmission (DL) is determined.

5. Method according to one of the preceding claims, **characterized in that** the radio channel provided for the current downlink transmission (DL) is determined by the gateway (2).

6. Method according to Claim 5, **characterized in that** a future duty cycle (DC_f) is determined, which is made up of the duty cycle (DC_DL) required for the current downlink transmission (DL) and the duty cycle (Dc_u) that was used,
there being provision in particular for a firmly predefined maximum duty cycle (DC) of the radio channel provided for the current downlink transmission (DL) to be compared with the future duty cycle (DC_f), the current downlink transmission (DL) being sent by the gateway (2) if the future duty cycle (DC_f) is less than or equal to the maximum duty cycle (DC) of the radio channel, or the current downlink transmission (DC) not being sent if the future duty cycle (DC_f) is greater than the maximum duty cycle (DC) of the radio channel.

7. Method according to one of the preceding claims, **characterized in that** the unsent current downlink transmission (DL) is sent at a later time.

8. Method according to one of the preceding claims, **characterized in that** the gateway (2) responds to a non-sending of the current downlink transmission (DL) by sending rejection information (7) about the non-sending to the applicable headend (11, 21).

9. Method according to one of the preceding claims, **characterized in that** the gateway (2) categorizes the current downlink transmission (DL) according to a priority of the current downlink transmission (DL), there being provision in particular for the current downlink transmission (DL) to be prioritized on the basis of
- the frequency of reception of uplink transmissions of a radio node (12, 22) and/or
- the characteristic of the current downlink transmission (DL).

10. Method according to one of the preceding claims, **characterized in that** the gateway (2) receives reservation information (Res) from the headend (11) of the first network (10) or the headend (21) of the second network (20) and can then reserve a time window or a time for a future downlink transmission.

11. Method according to one of the preceding claims, **characterized in that** one of the radio nodes (12) is a radio node that supports multiple network protocols, there being provision in particular for the gateway (2) to send the current downlink transmission (DL) of the first network (10) to the radio node (12) of the first radio network (13) via the second radio network (23).

12. Method according to one of preceding Claims 8-11, **characterized in that** the rejection information (7) comprises additional information relating to the second network (20),
there being provision in particular for the first network (10) to send information (8) to the second network (20), the second network (20) taking the information (8) as a basis for sending the current downlink transmission (DL) via the second network (20).

13. Gateway (2) comprising at least one transceiver (5, 6) and an antenna (4), **characterized in that** the gateway (2) is configured to carry out the method according to one of the preceding claims.

14. Gateway (2) according to Claim 13, **characterized in that** the gateway (2) comprises a single antenna (3).

15. Gateway (2) according to Claim 13 or 14, **characterized in that** the gateway (2) comprises a proxy (3) and the method is carried out by the proxy (3).

16. Arrangement of a network infrastructure (1) comprising:
a first network (10) containing a headend (11) and at least one radio node (12),
a second network (20) containing a headend (21) and at least one radio node (13), and
a gateway for data transmission between the headend (11) of the first network (10) and the applicable radio node (12) of the first network (10) and between the headend (21) of the second network (20) and the applicable radio node (22) of the second network (20),
**characterized in that**
the gateway is a gateway (2) according to one of Claims 13-15.

## Revendications

1. Procédé de transmission en liaison descendante dans une infrastructure (1) de réseau avec un premier réseau (10) comprenant une extrémité de tête (11) et au moins un nœud radio (12), un deuxième réseau (20) comprenant une extrémité de tête (21) et au moins un nœud radio (22) et une passerelle (2),
une transmission en liaison descendante du premier réseau (10) et une transmission en liaison descendante du deuxième réseau (20) étant effectuées par la passerelle (2) et
le procédé comprenant des étapes suivantes :
réception d'une transmission en liaison descendante actuelle (DL) de l'extrémité de tête (11) du premier réseau (10) ou de l'extrémité de tête (21) du deuxième réseau (20) par la passerelle (2) ;
envoi ou non-envoi de la transmission en liaison descendante actuelle (DL) par la passerelle (2) en fonction d'un cycle de service (DC_u) , utilisé dans une période de temps précédente prédéfinie (T) pour des transmissions en liaison descendante du premier réseau (10) et du deuxième réseau (20), d'un canal radio prévu pour la transmission en liaison descendante actuelle (DL).

2. Procédé selon la revendication 1, **caractérisé en ce que** le premier réseau (10) et le deuxième réseau (20) communiquent par différents protocoles de réseau.

3. Procédé selon la revendication 1 ou 2, **caractérisé en ce qu'**un premier réseau radio (13) entre la passerelle (2) et le nœud radio (12) du premier réseau (10) et un deuxième réseau radio (23) entre la passerelle (2) et le nœud radio (22) du deuxième réseau (20) sont prévus, le même canal radio ou différents canaux radio étant prévus pour des transmissions en liaison descendante du premier réseau radio (13) et du deuxième réseau radio (23).

4. Procédé selon l'une des revendications précédentes, **caractérisé en ce que** le cycle de service (DC_DL) requis pour la transmission en liaison descendante actuelle (DL) est défini.

5. Procédé selon l'une des revendications précédentes, **caractérisé en ce que** le canal radio prévu pour la transmission en liaison descendante actuelle (DL) est défini par la passerelle (2).

6. Procédé selon la revendication 5, **caractérisé en ce qu'**est défini un futur cycle de service (DC_f), qui se compose du cycle de service (DC_DL) requis pour la transmission en liaison descendante actuelle (DL) et du cycle de service (DC_u) utilisé,
une comparaison du cycle de service (DC) maximal fixement spécifié du canal radio prévu pour la transmission en liaison descendante actuelle (DL) au cycle de service futur (DC_f) étant en particulier prévue, la transmission en liaison descendante actuelle (DL) étant envoyée par la passerelle (2) lorsque le cycle de service futur (DC_f) est inférieur ou égal au cycle de service maximal (DC) du canal radio, ou la transmission en liaison descendante actuelle (DC) n'étant pas envoyée lorsque le cycle de service futur (DC_f) est supérieur au cycle de service maximal (DC) du canal radio.

7. Procédé selon l'une des revendications précédentes, **caractérisé en ce que** la transmission en liaison descendante actuelle (DL) non envoyée est envoyée à un moment ultérieur.

8. Procédé selon l'une des revendications précédentes, **caractérisé en ce que** la passerelle (2) envoie en tant que réponse à un non-envoi de la transmission en liaison descendante actuelle (DL) une information de rejet (7) sur le non-envoi à l'extrémité de tête (11, 21) correspondante.

9. Procédé selon l'une des revendications précédentes, **caractérisé en ce que** la passerelle (2) catégorise la transmission en liaison descendante actuelle (DL) selon une priorité de la transmission en liaison descendante actuelle (DL),
la réalisation de la priorisation de la transmission en liaison descendante actuelle (DL) étant prévue en particulier en fonction
- de la précision de réception de transmissions en liaison montante d'un nœud radio (12, 22) et/ou
- de la propriété de la transmission en liaison descendante actuelle (DL).

10. Procédé selon l'une des revendications précédentes, **caractérisé en ce que** la passerelle (2) reçoit une information de réservation (Res) de l'extrémité de tête (11) du premier réseau (10) ou de l'extrémité de tête (21) du deuxième réseau (20) puis peut réserver une fenêtre de temps ou un moment pour une transmission en liaison descendante future.

11. Procédé selon l'une des revendications précédentes, **caractérisé en ce qu'**un des nœuds radio (12) est un nœud qui prend en charge plusieurs protocoles de réseau, l'envoi par la passerelle (2) de la transmission en liaison descendante actuelle (DL) du premier réseau (10) au nœud radio (12) du premier réseau radio (13) par le deuxième réseau radio (23) étant en particulier prévu.

12. Procédé selon l'une des revendications précédentes 8 - 11, **caractérisé en ce que** l'information de rejet (7) comprend une information complémentaire sur le deuxième réseau (20),
l'envoi par le premier réseau (10) d'une information (8) au deuxième réseau (20) étant en particulier prévu, le deuxième réseau (20) envoyant la transmission en liaison descendante actuelle (DL) par le deuxième réseau (20) sur la base de l'information (8).

13. Passerelle (2) comprenant au moins un émetteur-récepteur (5, 6) ainsi qu'une antenne (4), **caractérisée en ce que** la passerelle (2) est mise au point pour exécuter le procédé selon l'une des revendications précédentes.

14. Passerelle (2) selon la revendication 13, **caractérisée en ce que** la passerelle (2) comprend une unique antenne (3).

15. Passerelle (2) selon la revendication 13 ou 14, **caractérisée en ce que** la passerelle (2) comprend un proxy (3) et le procédé est réalisé par le proxy (3).

16. Ensemble d'une infrastructure (1) de réseau comprenant :
un premier réseau (10) avec une extrémité de tête (11) et au moins un nœud radio (12),
un deuxième réseau (20) avec une extrémité de tête (21) et au moins un nœud radio (13), et
une passerelle pour la transmission de données entre l'extrémité de tête (11) du premier réseau (10) et le nœud radio (12) correspondant du premier réseau (10) ainsi qu'entre l'extrémité de tête (21) du deuxième réseau (20) et le nœud radio (22) correspondant du deuxième réseau (20),
**caractérisé en ce que**
la passerelle est une passerelle (2) selon l'une des revendications 13 - 15.
